# EUROPÄISCHE PATENTANMELDUNG

(11) **EP 2 448 387 A1**
(43) Veröffentlichungstag der Anmeldung: **02.05.2012**
(21) Anmeldenummer: 11187182.8
(22) Anmeldetag: 28.10.2011
(51) Int. Cl.: H05K 5/02

(54) **Schlüsselanhänger mit einer Kommunikationsvorrichtung**

(30) Priorität: 28.10.2010 EP 10189326
(71) Anmelder: Kurzo, Yvan, 6006 Luzern (CH); Berger, Christian, 8303 Basserdorf (CH)
(72) Erfinder: Kurzo, Yvan, 6006 Luzern (CH); Berger, Christian, 8303 Basserdorf (CH)
(74) Vertreter: Rutz & Partner

(57) **Zusammenfassung**

Der Schlüsselanhänger (1) weist eine in einem Gehäuse (10) angeordnete Kommunikationsvorrichtung (100) auf, mittels der Datenverbindungen zu wenigstens zwei Kommunikationsendgeräten (6A, 6B) hergestellt werden können. Erfindungsgemäss ist die Kommunikationsvorrichtung (100) mit einem ersten und einem zweiten Anschlusskabel (12A; 12B) verbunden, welche auf einander gegenüberliegenden ersten bzw. zweiten Seiten (10L; 10R) des Gehäuses (10) in einen ersten bzw. zweiten nach aussen geöffneten Kabelkanal (14A; 14B) einsenkbar und je mit einem ersten bzw. zweiten Steckverbinder (13A, 13B) versehen sind, die in eine an den ersten bzw. zweiten Kabelkanal (14A; 14B) anschliessende erste bzw. zweite Gehäuseöffnung (15A; 15B) einführbar sind.

## Beschreibung

Die Erfindung betrifft einen Schlüsselanhänger mit einer Kommunikationsvorrichtung sowie eine Kommunikationsvorrichtung für einen Schlüsselanhänger.

Aus der Offenlegungsschrift US 2009/0160607 A1 ist ein Schlüsselanhänger für Fahrzeuge bekannt, welcher eine Kommunikationsvorrichtung aufweist, die den Datentransfer zwischen einem Computersystem, wie einem Laptop, und einer in einem Fahrzeug vorgesehenen Kommunikationseinheit unterstützt. Die Datenkommunikation zwischen der Kommunikationsvorrichtung des Schlüsselanhängers und dem Computersystem erfolgt dabei drahtgebunden über ein USB-Kabel. Die Datenkommunikation zwischen der Kommunikationsvorrichtung des Schlüsselanhängers und der Kommunikationseinheit des Fahrzeugs erfolgt drahtlos, z.B. mittels des Bluetooth-Standards. Für die drahtgebundene Datenübertragung zwischen dem Computersystem und der Kommunikationsvorrichtung wird ein Kommunikationskabel mit einem Steckverbinder verwendet, welcher in eine Ausnehmung im Gehäuse des Schlüsselanhängers eingeführt wird. Das USB-Kabel wird dabei nur dann benötigt, wenn für den Betrieb oder die Diagnose des Fahrzeugs erforderliche Informationen transferiert werden sollen.

Dieser bekannte Schlüsselanhänger bietet daher nur beschränkte Kommunikationsmöglichkeiten und erfordert die Bereitstellung eines Kommunikationskabels, das typischerweise nicht vorhanden ist, wenn es benötigt wird.

Der vorliegenden Erfindung liegt daher die Aufgabe zugrunde, einen Schlüsselanhänger mit einer Kommunikationsvorrichtung zu schaffen, welcher keinen Einschränkungen hinsichtlich der Kommunikationsmöglichkeiten unterworfen und stets problemlos einsetzbar ist.

Der Schlüsselanhänger soll zudem geringe Abmessungen aufweisen und mit einem vorteilhaften Design versehen werden können.

Die Kommunikationsvorrichtung soll es zudem erlauben, Daten mit und zwischen Kommunikationsendgeräten zu übertragen, welche Hardware- und Software-Schnittstellen aufweisen, die nach identischen oder unterschiedlichen Hardware- und Software-Protokollen spezifiziert sind.

Weiterhin soll der Schlüsselanhänger gut gegen äussere Einwirkungen geschützt sein, so dass Defekte im mechanischen oder elektrischen Systemteil vermieden werden.

Ferner soll der Schlüsselanhänger unter Benutzung zumindest der Kommunikationsvorrichtung leicht auffindbar sein, so dass verlorene Schlüssel dem Eigentümer zurückgegeben werden können. Dazu soll mit einfachen Massnahmen verhindert werden, dass Schlüssel unbefugterweise vom Schlüsselanhänger getrennt werden können.

Diese Aufgabe wird mit einem Schlüsselanhänger und einer Kommunikationsvorrichtung gelöst, welcher die in Anspruch 1 bzw. Anspruch 15 angegebenen Merkmale aufweist. Vorteilhafte Ausgestaltungen der Erfindung sind in weiteren Ansprüchen angegeben.

Der Schlüsselanhänger weist eine in einem Gehäuse angeordnete Kommunikationsvorrichtung auf, mittels der Datenverbindungen zu wenigstens zwei Kommunikationsendgeräten hergestellt werden können.

Erfindungsgemäss ist die Kommunikationsvorrichtung mit einem ersten und einem zweiten Anschlusskabel verbunden, welche auf einander gegenüberliegenden ersten bzw. zweiten Seiten des Gehäuses in einen ersten bzw. zweiten je nach aussen geöffneten Kabelkanal einsenkbar und je mit einem ersten bzw. zweiten Steckverbinder versehen sind, die in eine an den ersten bzw. zweiten Kabelkanal anschliessende erste bzw. zweite Gehäuseöffnung einführbar sind.

Die Kommunikationsvorrichtung ist somit mit zwei Anschlusskabeln versehen, welche vom Gehäuse des Schlüsselanhängers aufgenommen und bedarfsweise eingesetzt werden können. Anhand des Schlüsselanhängers können somit bekannte Funktionen tragbarer Kommunikationsvorrichtungen sowie neue Funktionen vorteilhaft realisiert werden, wobei ansonsten auftretende Anschlussprobleme vermieden werden. Dabei ist es möglich, drahtgebundene Verbindungen zu einem ersten und/oder zu einem zweiten Kommunikationsendgerät zu erstellen, um Daten und Strom zwischen der Kommunikationsvorrichtung und dem ersten und/oder dem zweiten Kommunikationsendgerät auszutauschen. Weiterhin erlaubt es der Schlüsselanhänger, das erste und das zweite Kommunikationsendgerät direkt oder indirekt miteinander zu verbinden. Trotz dieser vorteilhaften Anschlussmöglichkeiten treten die Anschlusskabel nicht störend in Erscheinung, sondern sind vorteilhaft in das Gehäuse des Schlüsselanhängers integriert.

Der Schlüsselanhänger kann eine ästhetisch vorteilhafte Form und trotz der vorgesehenen Anschlusskabel mit geringen Abmessungen realisiert werden. Die Anschlusskabel können nicht nur ästhetisch vorteilhafte ausgestaltet sein, sondern auch aus Material, vorzugsweise robuster und elastischer Kunststoff, gefertigt werden, welches erlaubt, Schläge aufzufangen und abzufedern. Die Anschlusskabel, welche die Kabelkanäle überragen, dienen daher gleichzeitig dem Schutz des Schlüsselanhängers und der darin vorgesehenen elektronischen Bauteile. Wird der Schlüsselanhänger fallen gelassen, so fällt er typischer weise auf eine Kante bzw. auf das dort vorgesehene Anschlusskabel, weshalb die Schlageinwirkung durch die Ummantelung der Anschlusskabel aufgefangen wird.

In bevorzugten Ausgestaltungen sind der erste und der zweite Steckverbinder je mit einem Isolationskörper versehen, welcher dieselben Abmessungen aufweist, wie die zugehörige erste bzw. zweite Gehäuseöffnung. Die Isolationskörper der Steckverbinder füllen daher die dafür vorgesehenen Gehäuseöffnungen vollständig aus und bilden vorzugsweise einen an das Gehäuse angepassten und darin praktisch nahtlos integrierten Gehäuseteil.

Der erste und der zweite Steckverbinder können dabei identische oder unterschiedliche Steckerkonfigurationen aufweisen, die an die Schnittstellen der Kommunikationsgeräte des Anwenders angepasst sind. Die Steckverbinder sind z.B. vom Typ USB, Mini USB, Micro USB, Firewire, etc. wie er an den Geräten des Anwenders vorgesehen ist. Diese Steckertypen weisen typischerweise 4 Pole auf, von den zwei der Datenübertragung und zwei der Stromversorgung dienen.

In vorzugsweisen Ausgestaltungen wird wenigstens eine Leitungsader der Anschlusskabel mit der Stromversorgungseinheit der Kommunikationsvorrichtung verbunden, so dass ein darin vorgesehenen Akkumulator während eines drahtgebundenen Kommunikationsvorganges automatisch geladen wird. Beispielsweise wird der Akkumulator direkt über die Stromversorgungsleitung eines Anschlusskabels geladen. Alternativ kann auch elektrische Energie von den Datenübertragungsleitungen abgenommen werden.

Damit der Akkumulator auch dann geladen wird, wenn keines der Anschlusskabel angeschlossen ist, wird vorzugsweise wenigstens ein Stromerzeuger in den Schlüsselanhänger integriert, der beispielsweise Sonnenenergie, Wärmeenergie oder mechanische Energie in elektrische Energie wandelt. Vorzugsweise werden Solarzellen vorgesehen, welche die Gehäuseschalen oder einen Teil davon bilden. Beispielsweise bilden auf einem Aluminium-Substrat aufgebaute Solarzellen selbst die Gehäuseschalen. Durch den Einbau des wenigstens einen Stromerzeugers bzw. Energiewandlers wird sichergestellt, dass der Schlüsselanhänger somit auch dann betriebsbereit ist, wenn er über längere Zeit über die Anschlusskabel nicht mit einem stationären Kommunikationsendgerät verbunden wurde. Dabei erlaubt es der Schlüsselanhänger auch, als Host zu arbeiten und peripher angeschlossene Geräte zu speisen. Beispielsweise kann ein Memory-Stick angeschlossen und solange gespeist werden, wie dies für die Datenübertragung erforderlich ist. Auf dem vorzugsweise vorgesehenen Display des Schlüsselanhängers kann dessen Status, einschliesslich des Zustandes der Stromversorgung und der zur Verfügung stehenden Funkkanäle, angezeigt werden.

Über die Stromversorgungsleitungen kann vorteilhaft auch eine Verbindung von einem stationären zu einem mobilen Endgerät erstellt werden, um Letzteres wieder aufzuladen.

Der erste und der zweite Steckverbinder weisen je eine aus dem Isolationskörper hervortretende erste bzw. zweite mit Anschlusskontakte versehene Anschlusseinheit auf, welche vorzugsweise in einen an die zugehörige erste bzw. zweite Gehäuseöffnung anschliessende erste bzw. zweite Aufnahmeöffnung einführbar ist. Auf diese Weise können die Anschlusseinheiten der Steckverbinder optimal im Gehäuse positioniert werden. Die Anschlusseinheiten werden vorzugsweise im zugehörigen Kabelkanal des Gehäuses gehalten, so dass Kraft aufgewendet werden muss, um die Steckverbinder aus dem Gehäuse wieder zu lösen. Alternativ oder zusätzlich werden die Anschlusskabel im zugehörigen Kabelkanal kraftschlüssig oder formschlüssig gehalten.

Vorzugsweise sind die erste und die zweite Aufnahmeöffnung parallel zueinander und senkrecht zur Längsachse des Schlüsselanhängers ausgerichtet. Auf diese Weise kann das Gehäuse vorteilhaft ausgestaltet werden. Die Steckverbinder sind optimal gehalten und können vorteilhaft bedient werden. Das Anschlusskabel bzw. die isolierte Leitung wird dabei in einem Winkel von etwa 90° vom Steckverbinder weggeführt und kann vollständig in den an die Gehäuseöffnung anschliessenden Kabelkanal eingesetzt werden, in dem sie vorzugsweise teilweise umschlossen gehalten sind. Dadurch wird sichergestellt, dass jedes Anschlusskabel über die gesamte Länge bündig am Gehäuse anliegt und keine Schlaufen vom Gehäuse abstehen.

In einer bevorzugten Ausgestaltung werden die erste und die zweite Aufnahmeöffnung entlang der Längsachse des Schlüsselanhängers auf gleicher Höhe seitlich gegeneinander versetzt in einem vorzugsweise zentral verlaufenden Ausleger des Gehäuses vorgesehen. Die erste und die zweite Aufnahmeöffnung können dabei auch eine gemeinsame Öffnung bilden, in die die Anschlusseinheiten der beiden vorzugsweise asymmetrisch ausgestalteten Steckverbinder einsetzbar sind. Auf diese Weise können die beiden Anschlusskabel identisch ausgestaltet werden.

Besonders schmal und elegant kann der Schlüsselanhänger ausgestaltet werden, wenn die erste und die zweite Aufnahmeöffnung entlang der Längsachse des Schlüsselanhängers gegeneinander versetzt sind, so dass die erste Aufnahmeöffnung in einem auf der zweiten Gehäuseseite vorgesehenen zweiten Gehäuseteil und die zweite Aufnahmeöffnung in ein auf der ersten Gehäuseseite vorgesehenen ersten Gehäuseteil vorgesehen werden kann. Die Steckverbinder und die beiden Gehäuseteile sind dabei übereinander angeordnet, wobei das erste Gehäuseteil in Kombination mit dem Isolationskörper des in das Gehäuse eingesetzten ersten Steckverbinders vorzugsweise dieselbe Form aufweist, wie das zweite Gehäuseteil in Kombination mit dem Isolationskörper des in das Gehäuse eingesetzten zweiten Steckverbinders. Obwohl die Steckverbinder unterschiedlich ausgestaltet sein können und unterschiedliche Anschlusstypen aufweisen können, resultiert dadurch eine symmetrische und somit ästhetisch vorteilhafte Ausgestaltung des Gehäuses des Schlüsselanhängers.

Vorzugsweise besteht das Gehäuse des Schlüsselanhängers aus zwei zueinander komplementären Gehäuseschalen, zwischen denen die als elektronische Baugruppe ausgebildete Kommunikationsvorrichtung vorgesehen ist. Im Oberteil des Gehäuses, welches vorzugsweise mit einem für die Befestigung der Schlüssel vorgesehenen Montagebügel versehen ist, sind die erste und die zweite Gehäuseöffnung sowie das erste und zweite Gehäuseteil ausgebildet. An den Randseiten der Gehäuseschalen sind auf der linken und rechten Gehäuseseite der erste und zweite Kabelkanal ausgebildet. Im Unterteil des Gehäuses ist zwischen den Gehäuseschalen eine vorzugsweise von der Längsachse durchstossene Eintrittsöffnung vorgesehen, durch die hindurch das erste und zweite Anschlusskabel zur Kommunikationsvorrichtung geführt sind.

Der Montagebügel dient dem Halten eines Schlüsselrings, an dem die Schlüssel befestigt sind. Damit die Schlüssel unbefugterweise nicht vom Schlüsselring gelöst werden können, weist dieser vorzugsweise zwei Endstücke auf, die durch ein Verschlusselement miteinander verbindbar sind, welches vom Montagebügel gehalten wird. Vorzugsweise ist das Verschlusselement kugelförmig ausgestaltet und mit einer Gewindebohrung versehen, die zu den vorzugsweise je mit einem Gewinde versehenen und koaxial zueinander ausgerichteten Endstücken des Schlüsselanhängers korrespondiert. Das Verschlusselement kann daher die beiden Endstücke miteinander verbinden oder von einem der Endstücke gelöst werden, um einen Schlüssel in den Schlüsselring einzuhängen oder daraus zu entfernen.

Erfindungsgemäss wird das Verschlusselement zwischen dem Montagebügel und dem Gehäuse, vorzugsweise einem Ausleger des Gehäuses, gehalten und gesichert. Durch die Sicherung des Verschlusselements ist es Unbefugten kaum mehr möglich, den Schlüsselring zu öffnen und die Schlüssel zu entnehmen. Die Schlüssel bleiben daher stets mit dem Schlüsselanhänger verbunden. Bei der Suche nach dem Schlüsselanhänger mittels der darin integrierten Kommunikationsvorrichtung bleibt somit gewährleistet, dass mit dem Schlüsselanhänger auch die Schlüssel gefunden werden

Der Montagebügel wird vorzugsweise durch einen Mechanismus gesichert, der nur durch ein Spezialwerkzeug betätigt werden kann. Beispielsweise werden die beiden Endstücke des Montagebügels durch eine Schraube miteinander verbunden, deren Kopf zum Spezialwerkzeug korrespondiert. In einer weiteren bevorzugten Ausgestaltung wird vorgesehen, dass der Mechanismus elektrisch betätigbar ist. Beispielsweise weisen die Endstücke des Montagebügels Verschlussringe auf, die sich innerhalb des Gehäuses überdecken und die von einem verschiebbaren Element durchstossen werden, welches z.B. mittels eines mit einer Magnetspule versehenen Aktuators zurück gezogen werden kann. Vorzugsweise wird vorgesehen, dass der Aktuator nur betätigt werden kann, wenn der Schlüsselanhänger über eines der Anschlusskabel mit einem Computerendgerät des Anwenders verbunden ist und mit Strom versorgt wird. Dabei wird vorzugsweise die Eingabe eines Passworts vorgesehen.

Sofern der Schlüsselanhänger über genügend Energie verfügt, kann die Betätigung des Aktuator auch über Funk gesteuert werden.

Vorzugsweise wird der Zustand des Schlüsselanhängers permanent überwacht und regelmässig an eine Servicezentrale übermittelt, welche dazu vorgesehen ist, Schlüsselanhänger zu überwachen und gegebenenfalls zu suchen. Beispielsweise werden registrierte Bewegungen, Temperaturen, Ortsdaten und/oder die Betätigung des Aktuators erfasst und aufgezeichnet. In der Folge werden die von der Kommunikationseinheit des Schlüsselanhängers übermittelten Daten ausgewertet, um die Historie vor einem Ereignisfall, gegebenenfalls einem Verlust des Schlüsselanhängers, ausgewertet.

Vorzugsweise weist der Schlüsselanhänger eine Bedienungseinheit mit wenigstens einem elektrischen Schaltkontakt auf, mittels dessen die Betriebsart der Kommunikationsvorrichtung einstellbar ist. Zur Anzeige dieser Betriebsart oder weiterer Informationen ist im Gehäuse vorzugsweise eine Anzeigeeinheit integriert.

Der elektrische Kontakt bzw. das Betätigungselement wird vorzugsweise als Sensor vorgesehen, welcher nicht nur Druck, sondern auch auf eine andere Messgrösse, wie die Temperatur oder den elektrischen Widerstand, des kontaktierenden Mediums erfasst. Auf diese Weise kann eine Betätigung des Schlüsselanhängers ausgeschlossen werden, wenn die Kontaktierung nicht durch die menschliche Hand erfolgt. Diese Massnahme ist für den Schlüsselanhänger, welcher wechselnden mechanischen Einflüssen ausgesetzt ist, besonders wichtig, da Fehlmanipulationen ausgeschlossen werden können. Vorzugsweise werden Sensoren verwendet, die auf den Anwender abgestimmt sind und somit gleichzeitig der biometrischen Authentisierung dienen.

In vorzugsweisen Ausgestaltungen weist die Kommunikationsvorrichtung eine Prozessoreinheit auf, die der Steuerung einer Schnittstelleneinheit dient, mittels der die vom ersten und vom zweiten Anschlusskabel geführten Datenkanäle direkt oder indirekt miteinander oder mit der Kommunikationsvorrichtung verbindbar sind. Die Kommunikationsvorrichtung kann daher drahtgebunden mit dem ersten und/oder dem zweiten Kommunikationsendgerät kommunizieren oder eine Verbindung zwischen dem ersten und dem zweiten Kommunikationsendgerät erstellen.

Die Kommunikationsvorrichtung mit den Anschlusskabeln erlaubt somit den Austausch von Daten mit und zwischen Kommunikationsendgeräten, die hinsichtlich Hardware und Software gleichen oder unterschiedlichen Protokollen unterworfen sind. Die Steckverbinder der Kabel sind entsprechend ausgestaltet. Weiterhin kann die Datenübertragung über die Anschlusskabel nach unterschiedlichen Protokollen spezifiziert sein, so dass die Kommunikationsvorrichtung als Gateway dienen kann, über den unterschiedliche Netzwerke miteinander verbindbar sind.

In einer weiteren vorzugsweisen Ausgestaltung weist die Schnittstelleneinheit der Kommunikationsvorrichtung eine Durchschalteeinheit auf, mittels der die einzelnen Leitungsadern der Anschlusskabel in einer entsprechenden Betriebsart miteinander verbindbar sind. Durch diese Massnahme wird eine Verbindung zwischen den beiden angeschlossenen Kommunikationseinheiten auf der Hardware-Ebene bzw. in der Bitübertragungsschicht der OSI-Architektur erstellt. Die beiden Anschlusskabel bilden in diesem Fall ein einheitliches Verbindungskabel, welches keinen Restriktionen für die Datenübertragung aufweist.

Alternativ wird in einer zweiten Betriebsart vorzugsweise vorgesehen, dass die von den Anschlusskabeln geführten ersten und zweiten Datenkanäle zugehörigen ersten und zweiten Schnittstellenmodulen zuführbar sind, welche die empfangenen Daten an ein Managementmodul abgeben, welches die zum Beispiel von der ersten Kommunikationseinheit empfangenen Daten weiteren Modulen der Kommunikationsvorrichtung zur Verfügung stellt oder an das zweite Schnittstellenmodul zur Übertragung an das zweite Kommunikationsendgerät weiterleitet. Durch die vorzugsweise programmierbaren Schnittstellenmodule werden die Daten aus dem entsprechend konfigurierten Datenkanal entnommen und dem Managementmodul zur Verfügung gestellt. Das Managementmodul kann die z.B. vom ersten Schnittstellenmodul erhaltenen Daten zur Kommunikationsvorrichtung zum Zwecke der Verarbeitung oder der Speicherung übertragen oder an das zweite Schnittstellenmodul weiterleiten, welches die Daten in einen entsprechend konfigurierten Datenkanal einfügt. Die Kommunikationsvorrichtung kann daher als vollwertiger Netzwerk-Gateway eingesetzt werden. Durch die Programmierung der Schnittstellenmodule können diese an verschiedene Netzwerk-Protokolle angepasst werden. Die Kommunikationsvorrichtung weist vorzugsweise einen fest installierten Flash-Speicher und/oder eine Schnittstelle auf, in die eine SD-Speicherkarte (Secure Digital Memory Card) einsetzbar ist, die der Aufnahme der Anwenderdaten dienen.

Zur Erfüllung der genannten Aufgaben weist die Kommunikationsvorrichtung eine Prozessoreinheit auf, die mit einem Speichermodul verbunden ist, in dem ein Betriebsprogramm und gegebenenfalls Anwenderdaten speicherbar sind. Beispielsweise sind ein Read Only Memory, in dem das Betriebsprogramm abgelegt ist, und ein Massenspeicher vorgesehen, in dem mehrere Gigabyte Anwenderdaten speicherbar sind.

In besonders bevorzugten Ausgestaltungen ist die Prozessoreinheit mit wenigstens einem Funkmodul versehen, über das Daten mit einem drahtlosen Netzwerk ausgetauscht werden können. Vorzugsweise sind ein der Ankopplung an drahtlose lokale Netzwerke dienendes erstes und ein der Ankopplung an Mobilfunknetze dienendes zweites Funkmodul vorgesehen. Beispielsweise arbeitet das erste Funkmodul nach einem Protokoll eines Ad Hoc Netzwerks, beispielsweise gemäss den Bluetooth-Protokollen, die es einer Netzwerkeinheit erlauben, sich automatisch in ein Netzwerk einzubinden. Die erfindungsgemässe Kommunikationsvorrichtung erlaubt es somit Datenkanäle drahtlos oder drahtgebunden angeschlossener Kommunikationseinheiten zu nutzen und miteinander zu koppeln. Die Gateway-Funktion der Kommunikationsvorrichtung wird dadurch beliebigen drahtlos oder drahtgebunden angeschlossenen Kommunikationsendgeräten zur Verfügung gestellt. Beispielsweise ist es möglich, die Daten von einem fest installierten Flash-Speicher und/oder einer eingesetzten SD-Speicherkarte drahtlos oder drahtgebunden an eine beliebige Netzwerkeinheit zu übertragen. Das zweite Funkmodul arbeitet beispielsweise nach dem GSM- oder UMTS-Standards.

Vorzugsweise ist vorgesehen, dass die Kommunikationsvorrichtung in Abhängigkeit bestimmter Ereignisse automatisch Verbindungen über eine der Schnittstellen aufbauen und Informationen übertragen kann. Beispielsweise werden nach einer Periode, innerhalb derer der Schlüsselanhänger nicht bewegt oder benutzt wurde, Informationen, die den Status, den Standort oder die Umgebung des Schlüsselanhängers betreffen, an eine Netzwerkeinheit, z.B. an einen Server eines dafür bestimmten Dienstleisters oder einen allgemeinen Notfalldienst (z.B. mit der entsprechenden Rufnummer, wie der in den USA verwendeten Notfallnummer 911) übermittelt. Weiterhin ist vorgesehen, dass Verbindungen zur Kommunikationsvorrichtung aufgebaut und Daten bzw. Informationen abgefragt werden können.

Dazu weist der Schlüsselanhänger wenigstens ein Informationserfassungsmodul auf, mittels dessen Informationen aus dem Umfeld des Schlüsselanhängers erfasst und über eine selbsttätig oder durch einen Anrufer erstellte Kommunikationsverbindung übertragen werden können.

Beispielsweise ist ein GPS-Modul (GPS: Global Positioning System) vorgesehen, mittels dessen die Daten des Standorts des Schlüsselanhängers ermittelt werden können. Anhand dieser Daten, die abgefragt oder automatisch übermittelt werden können, ist es möglich, den verloren gegangenen oder gestohlenen Schlüsselanhänger zu lokalisieren. Ferner kann ein Netzwerkmodul, z.B. ein W-Lan Modul vorgesehen werden, welches erlaubt, den Schlüsselanhänger innerhalb eines Netzwerks zuordnen.

Weiterhin sind vorzugsweise Sensoren vorgesehen, die es erlauben, die Umgebungsverhältnisse zu detektieren. Beispielsweise sind ein Beschleunigungssensor, ein Lichtsensor, ein Temperatursensor, ein Drucksensor und/oder ein Feuchtigkeitssensor vorgesehen, welche es erlauben, den Standort des Schlüsselanhängers zu bestimmen. Beispielsweise kann anhand des Beschleunigungssensors festgestellt werden, ob der Schlüsselanhänger transportiert wird. Der Temperatursensor und der Feuchtigkeitssensor erlauben es, festzustellen, ob sich der Schlüsselanhänger innerhalb oder ausserhalb eines Gebäudes befindet oder von einer Person getragen wird.

Anhand des Temperatursensors, des Drucksensors und des Feuchtigkeitssensors können zudem Wetterdaten ermittelt oder prognostiziert und auf der Anzeigeeinheit dargestellt werden.

Anhand eines biometrischen Sensors ist es möglich, die Identität des Anwenders zu authentisieren. Dabei wird vorgesehen, dass die Funktionen des Schlüsselanhängers vorzugsweise erst nach Authentisierung des Anwenders freigegeben werden.

Anhand einer Zeitmesseinheit und des Beschleunigungssensors ist es ferner möglich, eine Meldung nach einer vorgesehenen Zeitperiode zu initialisieren, innerhalb der der Schlüsselanhänger nicht bewegt wurde. Dabei können unterschiedliche Zeitperioden für die Tageszeit und die Nachtzeit festgelegt werden. Beispielsweise kann vorgesehen werden, dass eine Meldung initialisiert wird, wenn der Schlüsselanhänger während des Tages innerhalb von zwei Stunden nicht bewegt wurde. Dabei wird die Meldung vorzugsweise als Kurzmitteilung (Short Message) mittels des Short Message Dienstes (SMS) des Mobilfunknetzes vorzugsweise direkt zum Mobilendgerät des Eigentümers des Schlüsselanhängers übertragen. Die Übertragung von Mitteilungen mittels des Short Message Dienstes (SMS) des Mobilfunknetzes benötigt weniger Ressourcen und gelingt normalerweise auch bei nicht optimalen Empfangsverhältnissen. Vorteilhaft ist ferner die Übertragung von Meldungen über einen paketorientierten Funkdienst, wie den allgemeinen paketorientierten Funkdienst (General Packet Radio Service (GPRS)) der GSM- und UMTS-Mobilfunknetze.

Die Kommunikationsvorrichtung kann somit unabhängig von der konkreten Ausgestaltung des Gehäuses des Schlüsselanhängers stets vorteilhaft eingesetzt werden.

Nachfolgend wird die Erfindung anhand von Zeichnungen näher erläutert. Dabei zeigt:
- Fig. 1: einen erfindungsgemässen Schlüsselanhänger 1 mit einem Gehäuse 10, in dem zwei mit Anschlusssteckern bzw. Steckverbindern 13A, 13B versehene Anschlusskabel 12A, 12B aufgenommen sind;
- Fig. 2: den Schlüsselanhänger 1 von Figur 1 in einer ersten vorzugsweisen Ausgestaltung nach dem Lösen der zwei Anschlusskabel 12A, 12B vom Gehäuse 10 in dem die Steckverbinder 13A, 13B auf gleicher Höhe in einen Ausleger 110 des Gehäuses 10 eingesetzt werden;
- Fig. 3: den Schlüsselanhänger 1 von Figur 1 in einer zweiten vorzugsweisen Ausgestaltung nach dem Lösen der zwei Anschlusskabel 12A, 12B vom Gehäuse 10 in dem die Steckverbinder 13A, 13B auf gleicher Höhe in einen Ausleger 110 des Gehäuses 10 eingesetzt werden;
- Fig. 4: den Schlüsselanhänger 3 von Figur 3 von der rechten Seite;
- Fig. 5: den Schlüsselanhänger 1 von Figur 3 von der linken Seite;
- Fig. 6: den Schlüsselanhänger 1 von Figur 1 in räumlicher Darstellung;
- Fig. 7: den Schlüsselanhänger 1 von Figur 1 mit einer Anzeigeeinheit 107 und einer Bedienungseinheit 105;
- Fig. 8: den Schlüsselanhänger 1 von Figur 1 mit der darin integrierten Kommunikationsvorrichtung 100 in schematische Darstellung nach dem Verbinden der zwei Anschlusskabel 12A, 12B mit zwei externen Kommunikationsendgeräten 6A, 6B;
- Fig. 9: den Schlüsselanhänger 1 in einer erweiterten Konfiguration mit einer Schnittstelleneinheit 106, welche über die Anschlusskabel 12A, 12B mit Schnittstellenmodulen 60A, 60B der Kommunikationsendgeräte 6A, 6B verbunden ist;
- Fig. 10: den Schlüsselanhänger 1 von Figur 2 in einer vorzugsweisen Ausgestaltung mit einem gesicherten Schlüsselring 21;
- Fig. 10a-b: den Schlüsselring 21 mit einem kugelförmigen Verschlusselement 210 in einer ersten und einer zweiten Position, in denen der Schlüsselring 21 verschlossen bzw. geöffnet ist.

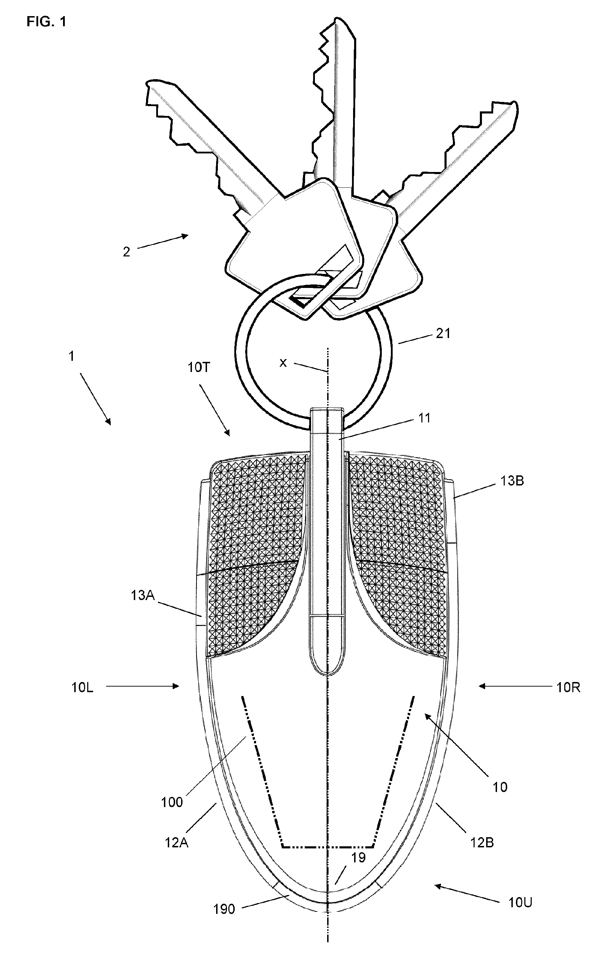

Figur 1 zeigt einen erfindungsgemässen Schlüsselanhänger 1 mit einem Gehäuse 10, in dem zwei Anschlusskabel 12A, 12B aufgenommen sind. Am Oberteil 10T des Schlüsselanhängers 1 ist ein U-förmiger Montagebügel 11 vorgesehen, der den Schlüsselanhänger 1 beidseitig umfasst und einen Schlüsselring 21 mit drei Schlüsseln 2 hält. Das in die linke Gehäuseseite 10L eingesenkte erste Anschlusskabel 12A und das in die rechte Gehäuseseite 10R eingesenkte zweite Anschlusskabel 12B weisen je einen im Oberteil 10T des Schlüsselanhängers 1 parkierten Steckverbinder 13A bzw. 13B auf und verlaufen entlang den Seitenrändern des Schlüsselanhängers 1 bis zu einer Eintrittsöffnung 19 im Unterteil 10U des Schlüsselanhängers 1.

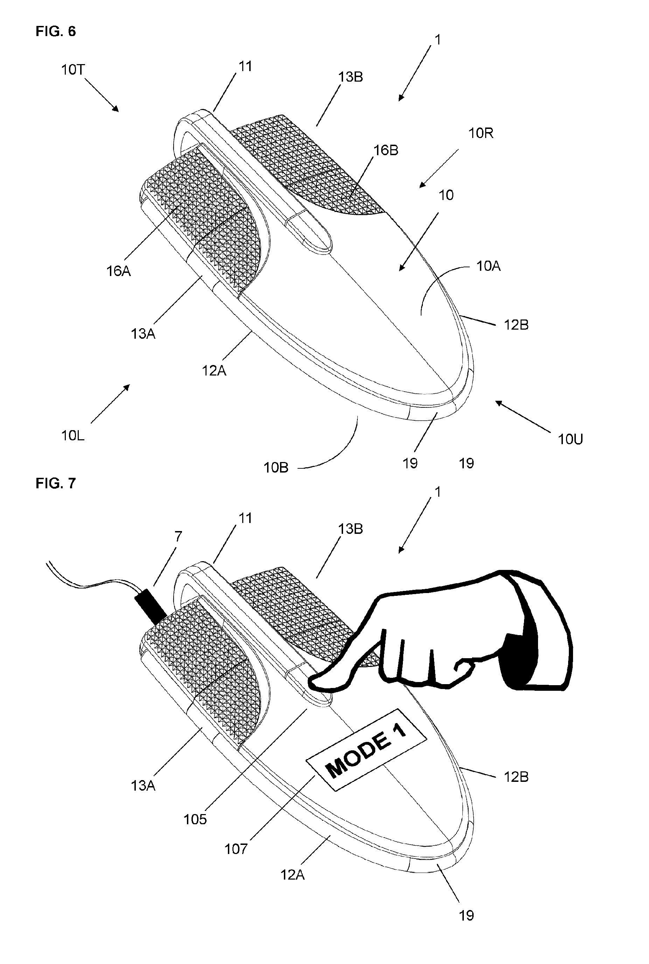

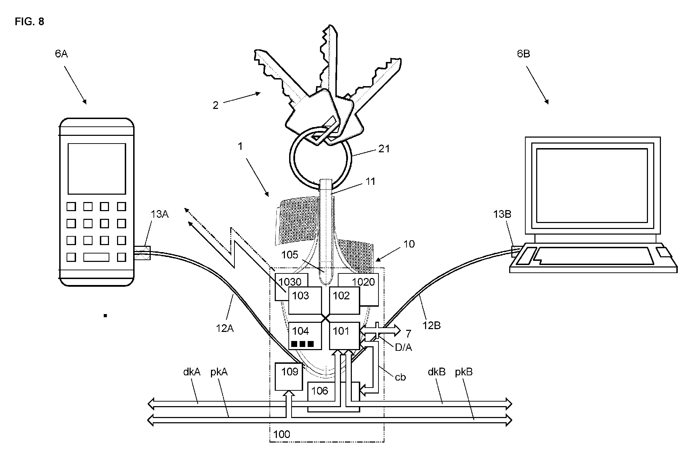

Die Leitungen der Anschlusskabel 12A, 12B werden durch die Öffnung 19 im Bereich der Längsachse x des Schlüsselanhängers 1 zu einer innerhalb des Schlüsselanhängers 1 vorgesehenen Kommunikationsvorrichtung 100 geführt, die schematisch gezeigt ist (siehe die Figuren 7 und 8). Dabei werden die Anschlusskabel 12A, 13B mittels eines vorzugsweise vorgesehenen Tunnelelements 190 zur Öffnung 19 geführt und gegen mechanische Beanspruchung geschützt.

Aus Figur 1 ist ersichtlich, dass die parkierten Anschlusskabel 12A, 12B mit dem Gehäuse 10 eine Einheit bilden, weshalb der Schlüsselanhänger 1 einen vorteilhaften ästhetischen Eindruck hinterlässt und von einem einstückigen Schlüsselanhänger kaum zu unterscheiden ist. Die Anschlusskabel 12A, 12B sind dabei derart vorteilhaft in das Gehäuse 10 integriert, dass diese nicht störend in Erscheinung treten und auch nicht unabsichtlich vom Gehäuse 10 gelöst werden können.

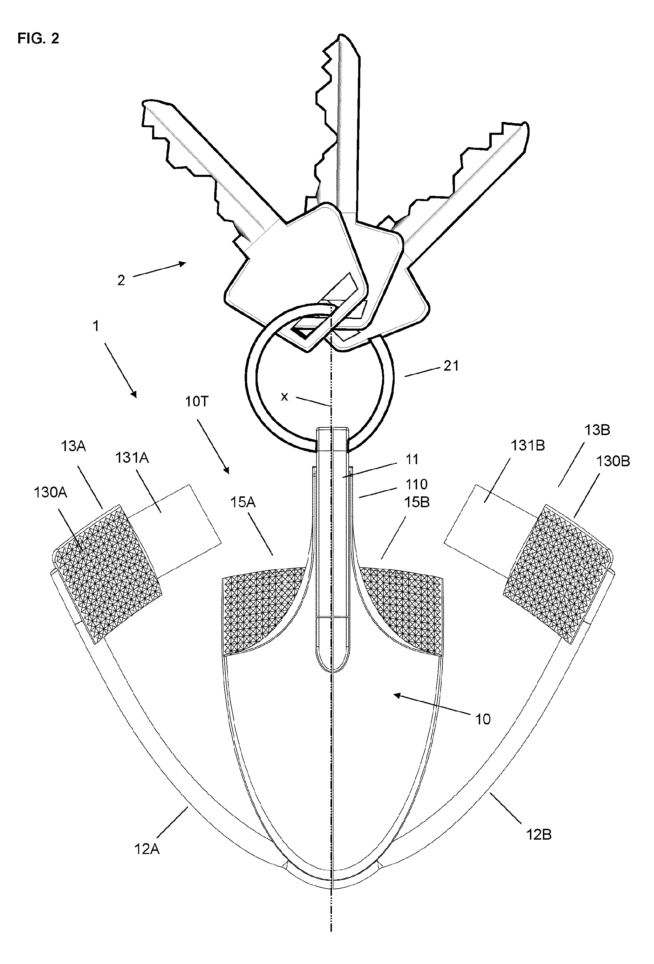

Erst durch einen manuellen Eingriff können die Anschlusskabel 12A, 12B wahlweise vom Gehäuse 10 gelöst werden, wie dies in Figur 2 gezeigt ist. Dabei ist es möglich, beide oder nur eines der Anschlusskabel 12A oder 12B vom Gehäuse 10 zu lösen und eine drahtgebundene Verbindung mit einem der Kommunikationsendgeräte 6A oder 6B gemäss Figur 7 herzustellen. Dies ist beispielsweise der Fall, wenn der Schlüsselanhänger als Datenspeicher (Memory Stick) verwendet wird, auf den Daten z.B. eines Personalcomputers übertragen werden.

Besonders vorteilhaft ist, dass die Anschlusskabel 12A, 12B bzw. deren Ummantelung das Gehäuse 10 nach aussen überragen. Falls der Schlüsselanhänger 1 fallen gelassen wird, so kann er nicht mehr mit einer Gehäusekante am Boden aufschlagen. Stattdessen wird der Schlag beim Auftreffen auf den Boden von der aus Kunststoff bestehenden Ummantelung elastisch aufgefangen, wodurch eine Beschädigung des Gehäuses 10 und der darin integrierten Elektronik vermieden werden kann.

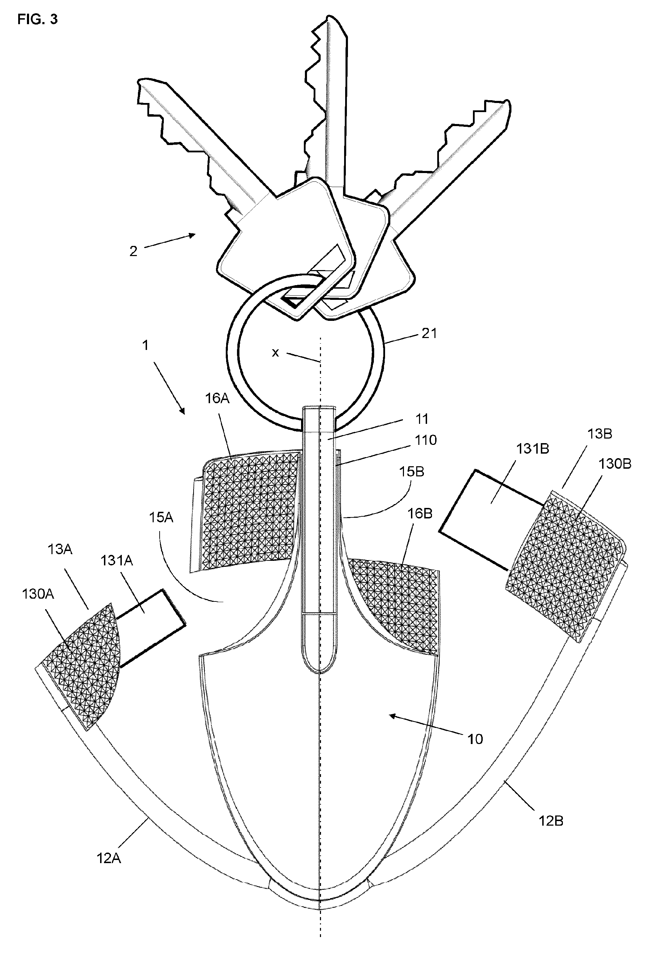

In den Figuren 2 und 3 sind zwei verschiedene Möglichkeiten zur Integration der Steckverbinder 13a, 13b in das Gehäuse 10 gezeigt.

In Figur 2 sind die beiden Steckverbinder 13A und 13b auf gleicher Höhe angeordnet, so dass die Isolationskörper 130A, 130B der Steckverbinder 13A, 13B die Schultern des Schlüsselanhängers 1 bilden, zwischen denen ein Ausleger 111 des Gehäuses 10 verläuft, der mit einem Montagebügel 11 verbindbar ist. Im Ausleger 111 sind Öffnungen vorgesehen, in die die Anschlusseinheiten 131A, 131B der Steckverbinder 13A, 13B einführbar sind. Bei dieser Ausgestaltung können die beiden Anschlusskabel 13A, 13B identisch ausgestaltet sein, wodurch sich die Produktionskosten entsprechend reduzieren. Die Anschlusseinheiten 131A, 131B sind vorzugsweise exzentrisch angeordnet, so dass sie innerhalb des Auslegers 111 nebeneinander liegen.

In der Ausgestaltung von Figur 3 sind die Steckverbinder in der Höhe gegeneinander versetzt. Zur Aufnahme der beiden Steckverbinder 13A und 13B weist das Gehäuse 10 erste und zweite Ausnehmungen bzw. Gehäuseöffnungen 15A, 15B auf, an die die Isolationskörper 130A, 130B der Steckverbinder 13A, 13B angepasst sind. Die Isolationskörper 130A, 130B der Steckverbinder 13A, 13B bilden dabei Bausteine des Gehäuses 10, mittels denen die Gehäuseöffnungen 15A, 15B gefüllt und das Gehäuse 10 mit einer einheitlichen Form abgeschlossen werden kann. Das Gehäuse 10 des Schlüsselanhängers 1 kann daher mit einer beliebigen Form versehen werden, in der die Isolationskörper 130A, 130B der Steckverbinder 13A und 13B integrale Bestandteile bilden.

Damit die Isolationskörper 130A, 130B der Steckverbinder 13A und 13B vollständig in das Gehäuse 10 integriert werden können, ist anschliessend an jede Gehäuseöffnung 15A bzw. 15B eine Aufnahmeöffnung 150A; 150B vorgesehen, in die eine aus dem betreffenden Isolationskörper 130A bzw. 130B hervortretende erste bzw. zweite Anschlusseinheit 131A; 131B, beispielsweise eine Hülse mit Anschlusskontakten, vollständig einsenkbar ist.

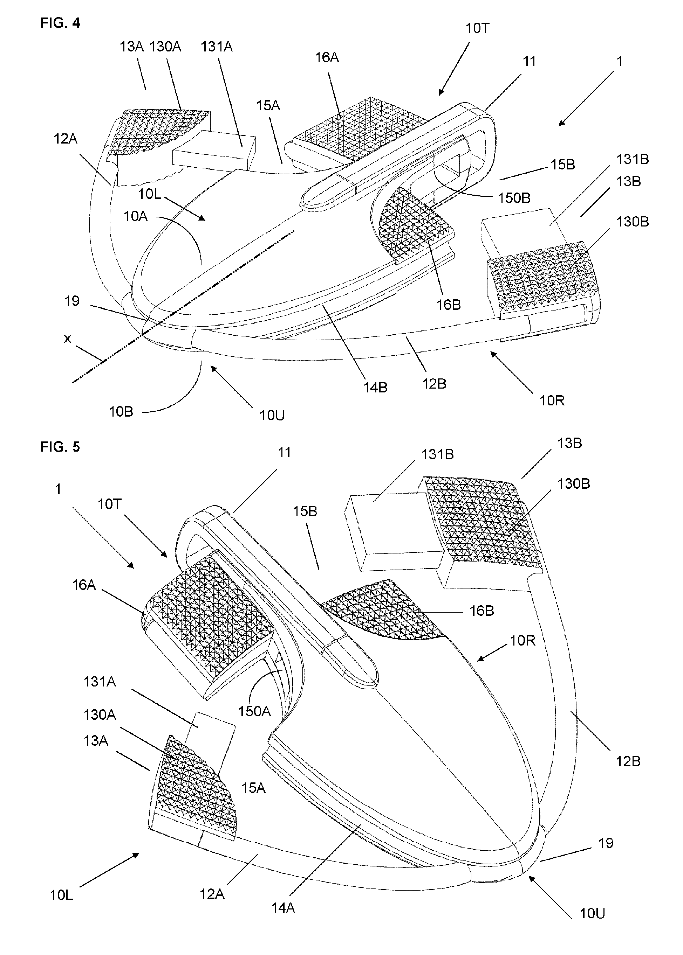

In Figur 4 ist weiter gezeigt, dass die Anschlusseinheit 131B des zweiten Steckverbinders 13B in eine Aufnahmeöffnung 150B in einem ersten Gehäuseteil 16A einsenkbar ist, welches das linke Eckstück des Oberteils 10T des Gehäuses 10 bildet. Der Isolationskörper 130B des zweiten Steckverbinders 13B bildet dabei das rechte Eckstück des Oberteils 10T, das gleiche äussere Abmessungen wie das erste Gehäuseteil 16A aufweist.

In Figur 5 ist gezeigt, dass die Anschlusseinheit 131A des ersten Steckverbinders 13A in eine Aufnahmeöffnung 150A in einem zweiten Gehäuseteil 16B einsenkbar ist, welches ein Kreissegment im rechten Gehäuseteil 10R bildet. Der Isolationskörper 130A des ersten Steckverbinders 13A bildet dabei Kreissegment im linken Gehäuseteil 10L, welches die gleichen äusseren Abmessungen wie das zweite Gehäuseteil 16B aufweist. Durch die identische äussere Ausgestaltung des ersten bzw. zweiten Gehäuseteils 16A; 16B und des zugehörigen Isolationskörpers 130B, 130A des zweiten bzw. ersten Steckverbinders 13B, 13A resultiert eine harmonische Formgebung.

Die beiden Gehäuseteile 16A, 16B und die Isolationskörper 130B, 130A weisen eine andere Oberflächenbeschaffenheit auf als die weiteren Teile des Gehäuses 10. In der beispielhaft gezeigten Ausgestaltung ist eine raue Oberfläche vorgesehen, welche es erlaubt, die Isolationskörper 130B, 130A fest zu ergreifen und vom Gehäuse 10 zu lösen. Anstatt einer rauen Oberfläche kann der Isolationskörper 130B, 130A auch mit einem 2-Komponenten-Kunststoff hergestellt werden, wobei ein weicher äusserer Teil des Kunststoffes als Griffelement dient, um die Isolationskörper 130B, 130A fest ergreifen und vom Gehäuse 10 lösen zu können.

In den Figuren 4 und 5 ist ferner gezeigt, dass das Gehäuse 10 vorteilhaft aus zwei Gehäuseschalen 10A, 10B gefertigt ist, die in der gezeigten Ausgestaltung je die Form eines Schildes aufweisen. Die beiden Gehäuseschalen 10A, 10B bilden einen flachen Gehäusekörper und umschliessen dazwischen eine entsprechend breite Öffnung mit geringer Höhe. In diese Öffnung ist eine elektronische Baugruppe eingesetzt, auf der die Bauteile der Kommunikationsvorrichtung 100 vorgesehen sind.

Die Seitenränder der zusammengefügten Gehäuseschalen 10A, 10B bilden im linken Gehäuseteil 10L einen einerseits an die erste Gehäuseöffnung 15A und andererseits an die Eintrittsöffnung 19 anschliessenden ersten und im rechten Gehäuseteil 10R einen einerseits an die zweite Gehäuseöffnung 15B und andererseits an die Eintrittsöffnung 19 anschliessenden zweiten Kabelkanal 14A bzw. 14B. Jeder Kabelkanal 14A bzw. 14B umfasst vorzugsweise ein Kreissegment, welches einen Winkel aufweist, der vorzugsweise grösser als 180°, z.B. 200°-220°, ist. Die Anschlusskabel 12A, 12B können daher mit leichtem Druck in den zugehörigen Kabelkanal 14A, 14B gepresst werden und werden anschliessend formschlüssig und/oder kraftschlüssig darin gehalten. Grundsätzlich ist auch möglich, jeden Kabelkanal 14A, 14B so auszugestalten, dass die Anschlusskabel 12A, 12B vollständig aufgenommen werden können. Sofern die Anschlusskabel 12A, 12B jedoch aus dem Kabelkanal 14A, 14B hervor stehen, dienen sie gleichzeitig als Dämpfungselemente, welche den Schlüsselanhänger 1 gegen äussere Einwirkungen schützen.

Aus den Figuren 4 und 5 ist ferner ersichtlich, dass die erste und die zweite Aufnahmeöffnung 150A, 150B parallel zueinander und senkrecht zur Längsachse x des Schlüsselanhängers 1 verlaufen und entlang der Längsachse x des Schlüsselanhängers 1 in der Ausgestaltung von Figur 3 gegeneinander versetzt sind, so dass die erste Aufnahmeöffnung 150A in das auf der zweiten Gehäuseseite 10R vorgesehene zweite Gehäuseteil 16B und die zweite Aufnahmeöffnung 150B in das auf der ersten Gehäuseseite 10L vorgesehenes erste Gehäuseteil 16A hinein geführt werden kann. Auf diese Weise ist ein besonders schlanker Aufbau des Schlüsselanhängers 1 möglich, welcher somit in jede Bekleidungstasche passt.

Alternativ ist es auch möglich, die erste und die zweite Aufnahmeöffnung 150A, 150B, die senkrecht zur Längsachse x des Schlüsselanhängers 1 verlaufen, sowie die beiden Gehäuseteile 16A, 16B senkrecht zur Längsachse x des Schlüsselanhängers 1 gegeneinander zu versetzen. In diesem Fall liegen die beiden Gehäuseteile 16A, 16B sowie die beiden Steckverbinder 13A, 13B relativ zur Längsachse x auf derselben Höhe. Die beiden Steckverbinder 13A, 13B liegen in diesem Fall hintereinander. Die Länge des Steckverbinders 1 kann daher entsprechend reduziert werden. Hingegen erhöht sich die Dicke des Steckverbinders um einige Millimeter.

Figur 6 zeigt den Schlüsselanhänger 1 von Figur 1 in räumlicher Darstellung mit den beiden miteinander verbundenen Gehäuseschalen 10A, 10B, die an der Oberseite vorzugsweise vom Montagebügel 11 zusammengehalten werden. Dabei ist nicht wahrnehmbar, ob der Schlüsselanhänger 1 in der vollständig symmetrischen Ausgestaltung von Figur 2 oder in der Ausgestaltung von Figur 3 vorliegt.

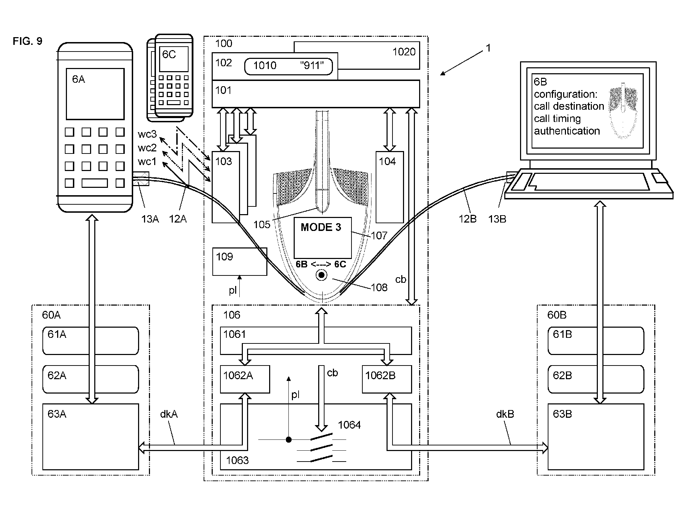

Figur 7 zeigt den Schlüsselanhänger 1 von Figur 6 mit einer Anzeigeeinheit 107 und einer Bedienungseinheit 105, die unterhalb des Montagebügels 11 als einzelne Taste vorgesehen ist, deren Form an den Montagebügel 11 angepasst ist. Grundsätzlich können auch mehrere Tasten vorgesehen werden. Beispielsweise wird an beiden Enden des Montagebügels 11 eine Taste vorgesehen, so dass das Gerät leichter bedient werden kann. Mittels der Bedienungseinheit 105 kann beispielsweise die Betriebsart der Kommunikationsvorrichtung 100 eingestellt werden. Beispielsweise können in der Kommunikationsvorrichtung 100 Musikstücke abgespeichert werden, welche in der Folge mittels der Bedienungseinheit 105 selektiert werden können. Zum Abhören der Musik kann ein Kopfhörer entweder drahtlos über einen der Funkkanäle wc1, wc2, wc3 (siehe Figur 9) oder über ein Anschlusskabel 7 mit der Kommunikationsvorrichtung 100 verbunden werden.

Figur 8 zeigt den Schlüsselanhänger 1 von Figur 1 mit der darin integrierten Kommunikationsvorrichtung 100 in schematischer Darstellung. Die Kommunikationsvorrichtung 100 ist mittels der beiden Anschlusskabel 12A, 12B mit zwei externen Kommunikationsendgeräten 6A, 6B, nämlich einem Mobilfunktelefon 6A und einem Personal Computer 6B verbunden, zu denen Kanäle dkA, dkB; pkA, pkB erstellt werden können, die der Übertragung von Daten und elektrischer Energie dienen. Der erste und der zweite Steckverbinder 13A, 13B sind z.B. vom Typ USB, Mini USB, Micro USB, Firewire, etc.. Diese Steckertypen weisen typischerweise vier Pole auf, von den zwei der Datenübertragung und zwei der Stromversorgung dienen. Die beiden der Stromversorgung dienenden Pole bzw. Leitungen der Anschlusskabel 12A, 12B sind mit der Stromversorgungseinheit 109 bzw. einem darin vorgesehenen Akkumulator verbunden, der jeweils geladen wird, wenn eines der Anschlusskabel 12A oder 12B mit einem Kommunikationsendgerät 6A, 6B verbunden ist.

In der Kommunikationsvorrichtung 100 ist eine Prozessoreinheit 101 vorgesehen, die über einen Steuerkanal cb eine Schnittstelleneinheit 106 steuert, mittels der die vom ersten und vom zweiten Anschlusskabel 12A; 12B geführten Datenkanäle dkA, dkB direkt oder indirekt miteinander oder mit der Kommunikationsvorrichtung 100 verbindbar sind.

Die Prozessoreinheit 101 ist mit wenigstens einem fest installierten ersten und einem fest oder lösbar installierten zweiten Speichermodul 102; 1020 verbunden. Beispielsweise ist ein Microcontroller vorgesehen der die Prozessoreinheit 101 und das erste Speichermodul 102 umfasst, in dem ein Betriebsprogramm 1010 (siehe Figur 9) und gegebenenfalls Anwenderdaten speicherbar sind. Das zweite Speichermodul 1020 ist beispielsweise ein fest installierter Massenspeicher oder eine einsetzbare SD-Speicherkarte, wie sie in Digitalkameras verwendet wird.

Weiterhin ist ein erstes Funkmodul 103 vorgesehen, mittels dessen die Verbindung zu einem drahtlosen Ad-Hoc-Netzwerk aufgebaut werden kann, welches beispielsweise nach den Bluetooth-Protokollen arbeitet. Ferner ist ein zweites Funkmodul 1030 vorgesehen, mittels dessen eine Verbindung zu einem Mobilfunknetz, beispielsweise einem GSM- oder UMTS-Mobilfunknetz aufgebaut werden kann.

Zudem ist die Prozessoreinheit 101 mit einem Informationserfassungsmodul 104 verbunden, welches einen oder mehrere Sensoren umfasst, mittels denen Informationen vom Anwender, aus der Umgebung oder von weiteren Funksystemen, wie dem GPS-System, erfasst werden können. In vorzugsweisen Ausgestaltungen sind eine Zeitmesseinheit, ein Beschleunigungssensor, ein Temperatursensor, ein Feuchtigkeitssensor, ein Drucksensor, ein Lichtsensor, und/oder ein biometrischer Sensor (zum Beispiel ein Fingerabdruckleser) vorgesehen, die gemäss den obigen Ausführungen eingesetzt werden.

Die gewonnenen Informationen können über einen der beschriebenen Kommunikationskanäle drahtlos oder drahtgebunden zu den Kommunikationsendgeräten 6A, 6B oder zu Kommunikationsendgeräten in drahtlosen Netzwerken übertragen werden. Wie erwähnt, können die Informationen auch automatisch übermittelt oder abgefragt werden, damit die Position des Schlüsselanhängers 1 bestimmt werden kann.

Figur 8 zeigt ferner, dass Daten optional über einen D/A-Wandler zu einem Köpfhöreranschluss 7 geführt werden können. Weiterhin kann ein mobiles Endgerät 6a über die Anschlusskabel 12A, 12B mit einer Stromquelle verbunden werden, um dieses aufzuladen.

Figur 9 zeigt den Schlüsselanhänger 1 in einer erweiterten Konfiguration mit der Schnittstelleneinheit 106, welche über die Anschlusskabel 12A, 12B mit Schnittstellenmodulen 60A, 60B der Kommunikationsendgeräte 6A, 6B verbunden ist. Weiterhin umfasst die Schnittstelleneinheit 106 die erforderliche Logik und Hardware.

Die Schnittstelleneinheit 106 weist ein Anschlussmodul 1063 mit einer optionalen Durchschalteeinheit 1064 auf, mittels der die einzelnen Leitungsadern der Anschlusskabel 12A; 12B miteinander verbindbar sind. Nach dem Schliessen der entsprechenden Schaltkontakte 1064 bilden die beiden Anschlusskabel 12A, 12B ein einheitliches Verbindungskabel. Vorzugsweise wird vorgesehen, dass elektrische Energie von der Stromversorgungsleitung oder von einer Datenleitung der Anschlusskabel 12A, 12B abgezweigt und über eine Speiseleitung pl der Stromversorgungseinheit 109 zugeführt wird.

In einer weiteren Betriebsart werden die Datenkanäle dkA; dkB des ersten und/oder des zweiten Anschlusskabels 12A; 12B zugehörigen ersten und zweiten Schnittstellenmodulen 1062A, 1062B zugeführt, welche die empfangenen Daten an ein Managementmodul 1061 abgeben. Vom Managementmodul 1061 werden die z.B. vom ersten Kommunikationsendgerät 6A zugeführten Daten zur Verarbeitung oder Speicherung an die Kommunikationsvorrichtung 100 oder über das weitere Schnittstellenmodul 1062B an das zweite Kommunikationsendgerät 6B weitergegeben. Weiterhin können die Daten vom ersten zum zweiten Kommunikationsendgerät 6A, 6B übertragen und durch die Kommunikationsvorrichtung 100 kopiert werden.

Die beiden Schnittstellenmodule 1062A, 1062B erlauben es, Daten gemäss dem jeweils verwendeten Datenübertragungs-Protokoll aus dem Datenstrom bzw. aus den Datenrahmen zu entnehmen oder in diese einzufügen. Dabei werden die Schnittstellenmodule 1062A, 1062B gemäss dem angewendeten Protokoll symmetrisch oder asymmetrisch konfiguriert. Das erste Schnittstellenmodul 1062A wird z.B. als peripherer Softwaretreiber konfiguriert, welcher Daten vom Host bzw. dem ersten Kommunikationsendgerät 6A herunterladen kann. Das zweite Schnittstellenmodul 1062B wird z.B. als Host-Softwaretreiber konfiguriert, welcher Daten zu einer peripheren Einheit, nämlich zur zweiten Kommunikationseinheit 6B übertragen kann.

Die Schnittstellenmodule 60A, 60B der Kommunikationsendgeräte 6A, 6B, die in der gezeigten Ausgestaltung ein Managementmodul 61A, 61B; einen Softwaretreiber 62A, 62B und ein Anschlussmodul 63A, 63B aufweisen, werden ebenfalls entsprechend konfiguriert. Die Anschlussmodule 1063, 63A, 63B sind entsprechend den Spezifikationen der Schnittstelle ausgestaltet. Beispielsweise bei der USB-Schnittstelle (USB: Universal Serial Bus) werden elektrische Signale und die Betriebsspannung über ein vieradriges Kabel mit 90 Ohm Impedanz übertragen. Die Signalübertragung erfolgt differentiell über zwei dieser Adern, wobei mindestens 200 mV Eingabespannung für den Empfänger bereitgestellt werden müssen.

Gemäss dem Protokoll der USB-Schnittstelle führen alle Bus-Transaktionen zur Übertragung von bis zu drei Datenpaketen. Jede Transaktion beginnt, wenn der Host-Controller ein USB-Paket sendet, das die Art und Richtung der Transaktion sowie die Geräte-Adresse und Endpunkt-Nummer bestimmt. Dieses Paket wird als Token-Paket bezeichnet. Das angesprochene Gerät wird bestimmt, indem jedes angeschlossene Gerät die Adress-Felder dekodiert und sich im Falle der Übereinstimmung selbst selektiert. Bei einer bestimmten Transaktion können Daten entweder nur vom Host an ein Gerät gesendet werden oder der Host kann nur Daten eines Gerätes empfangen. Die Datenquelle sendet im Anschluss ein Datenpaket oder zeigt dem Empfänger an, dass keine weiteren Daten zu übertragen sind. Der Empfänger antwortet dann generell mit einem Handshake-Paket, welches anzeigt, ob die Übertragung erfolgreich war oder nicht. Für die Datenübertragung vom ersten zum zweiten Kommunikationsendgerät 6A bzw. 6b via die erfindungsgemässe Kommunikationsvorrichtung 100 werden gemäss dem USB-Transfer-Modell somit zwei Pipes bzw. Datenkanäle dkA und dkB aufgebaut.

Es ist auch möglich, dass die beiden Schnittstellenmodule 1062A, 1062B nach unterschiedlichen Protokollen arbeiten, so dass die Kommunikationsvorrichtung 100 als Gateway dienen kann. Beispielsweise wird das erste Anschlusskabel 12A mit einem Firewire Port von Apple® (Standard IEEE1394) des ersten Kommunikationsendgeräts 6A und das zweite Anschlusskabel 12B mit einem USB-Port des zweiten Kommunikationsendgeräts 6B verbunden.

Ferner ist es möglich, eine Datenverbindung zwischen einem der Kommunikationsendgeräte 6A, 6B, welches über ein Anschlusskabel 12A, 12B mit der Kommunikationsvorrichtung 100 verbunden ist, über eines der Funkmodule 103 bzw. über einen ersten, zweiten oder dritten Funkkanal wc1, wc2 oder wc3 mit wenigstens einem dritten Kommunikationsendgerät 6c zu erstellen. Der Begriff "Kommunikationsendgerät" ist dabei weit gefasst und umfasst jedes Gerät, welches Daten empfangen oder senden kann.

In Figur 9 ist gezeigt, dass mittels der Bedienungseinheit 105 eine Verbindung zwischen dem zweiten Kommunikationsendgerät 6B und dem dritten Kommunikationsendgerät 6C erstellt wurde. Weiter ist gezeigt, dass in der ersten Speichereinheit 102 das Betriebsprogramm 1010 der Kommunikationsvorrichtung 100 angeordnet ist, mittels dessen der vorzugsweise automatische Aufbau von Kommunikationsverbindungen sowie die Erfassung und Verarbeitung von Informationen gesteuert wird, die von der Informationserfassungseinheit 104 bzw. von Sensoren erfasst werden. Beispielsweise kann die Kommunikationseinheit 100 mit einer Servicestelle zum Beispiel einem Notfalldienst (z.B. mit der Rufnummer 911)automatisch Kontakt aufnehmen oder von diesem Anrufe entgegennehmen und Informationen abgeben. Eine solche Servicestelle kann den Anwender, der seinen Schlüsselanhänger 1 verloren hat, entsprechend unterstützen. Vorzugsweise kann der Anwender seinen Schlüsselanhänger 1 frei programmieren. Dazu kann der Anwender ein Installationsprogramm auf dem Personalcomputer 6B installieren und die Kommunikationsvorrichtung 100 entsprechend konfigurieren. Beispielsweise kann der Anwender die Zieladresse festlegen, mit der die Kommunikationsvorrichtung 100 beim Auftreten eines relevanten Ereignisses eine Verbindung aufnimmt. Dabei kann der Anwender die Art der Verbindung sowie den Inhalt der übertragenen Daten festlegen. Beispielsweise wird festgelegt, dass die Positionsdaten mit einer Kurzmitteilung übertragen werden. Der Schlüsselanhänger kann ferner mit optischen und/oder akustischen Signalisierungselementen 108 versehen sein, die die Kommunikation unterstützen und das Auffinden des Schlüsselanhängers 1 erleichtern.

Die Aktionen zur Steuerung und Programmierung des Schlüsselanhängers 1 können vorzugsweise durch den Anwender drahtlos oder drahtgebunden oder durch einen Dienstleister drahtlos durchgeführt werden. Beispielsweise wird vorgesehen, dass der Anwender auf die Homepage des Dienstleisters zugreifen und Instruktionen eingeben kann, wonach der Dienstleister Kontakt mit dem Schlüsselanhänger aufnimmt und entsprechende Funktionen ausführt.

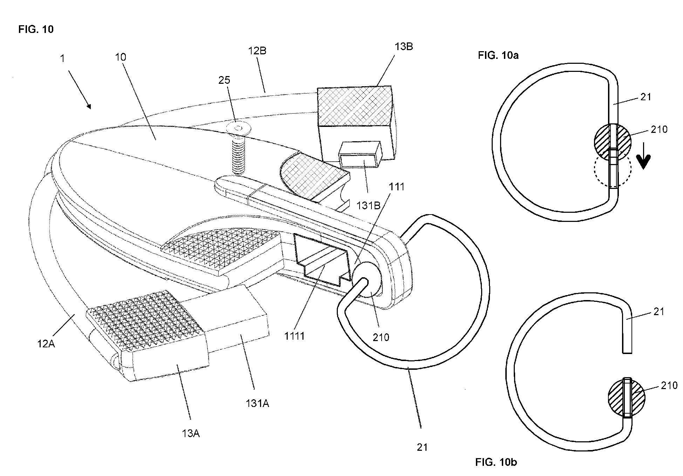

Bei der Suche nach einem verlorenen Schlüssel ist es notwendig, dass dieser nicht vom Schlüsselanhänger 1 getrennt wird. In der Ausgestaltung von Figur 10 ist daher vorgesehen, dass der Schlüsselring 21 durch ein Verschlusselement 210 gesichert wird, welches zwischen dem Ausleger 111 des Gehäuses 10 und dem Montagebügel in einem kugelförmigen Sitz gelagert und gelenkig, vorzugsweise aber nicht drehbar, gehalten wird. Das Verschlusselement 210 kann dabei nur dann gelöst werden, wenn der Montagebügel 11 entfernt wird. Damit unbefugte das Verschlusselement 210 nicht lösen können, wird der Montagebügel 11 vorzugsweise derart gesichert, dass er nur mittels eines Spezialwerkzeugs oder mittels des Computersystems des Anwenders gelöst werden kann. Beispielsweise wird der Montagebügel 11 mittels einer Schraube 25 gesichert, welche nur mit einem Spezialwerkzeug gelöst werden kann. Alternativ kann der Montagebügel 11 durch einen Aktuator gesichert werden, welcher nach dem Anschluss an das Computersystem des Anwenders durch Zufuhr elektrischer Signale und einer Steuerspannung betätigt werden kann.

Figur 10 zeigt, dass der Ausleger 111 des Gehäuses 10 in dieser Ausgestaltung mit einer erweiterten Öffnung 1111 versehen ist, die der Aufnahme der Anschlussstücke 131A, 131B beider Steckverbinder 13A, 13B dient.

In Figur 10 ist gezeigt, dass das Verschlusselement 210 die beiden koaxial ausgerichteten Endstücke des Schlüsselrings 21, die je mit einem Gewinde versehen sind, miteinander verbindet. Durch Drehen des mit einer Gewindebohrung versehenen Verschlusselements 210 kann dieses von einem Endstück gelöst und so weit über das andere Endstück gedreht werden, bis die Schlüssel aus dem Schlüsselring 21 entnommen werden können.

## Patentansprüche

1. Schlüsselanhänger (1) mit einer in einem Gehäuse (10) angeordneten Kommunikationsvorrichtung (100), mittels der Datenverbindungen zu wenigstens zwei Kommunikationsendgeräten (6A, 6B) hergestellt werden können, **dadurch gekennzeichnet, dass** die Kommunikationsvorrichtung (100) mit einem ersten und einem zweiten Anschlusskabel (12A; 12B) verbunden ist, welche auf einander gegenüberliegenden ersten bzw. zweiten Seiten (10L; 10R) des Gehäuses (10) in einen ersten bzw. zweiten nach aussen geöffneten Kabelkanal (14A; 14B) einsenkbar und je mit einem ersten bzw. zweiten Steckverbinder (13A, 13B) versehen sind, der in eine an den ersten bzw. zweiten Kabelkanal (14A; 14B) anschliessende erste bzw. zweite Gehäuseöffnung (15A; 15B) einführbar ist.

2. Schlüsselanhänger (1) nach Anspruch 1, **dadurch gekennzeichnet, dass** der erste und der zweite Steckverbinder (13A, 13B) je mit einem Isolationskörper (130A, 130B) versehen sind, welcher dieselben Abmessungen aufweist wie die zugehörige erste bzw. zweite Gehäuseöffnung (15A; 15B) und dass der erste und der zweite Steckverbinder (13A, 13B) identische oder unterschiedliche Anschlusskonfigurationen aufweisen.

3. Schlüsselanhänger (1) nach Anspruch 1 oder 2, **dadurch gekennzeichnet, dass** der erste und der zweite Steckverbinder (13A, 13B) je ein aus dem Isolationskörper (130A; 130B) hervortretende erste bzw. zweite Anschlusseinheit (131A; 131B) aufweist, welche in eine an die zugehörige erste bzw. zweite Gehäuseöffnung (15A; 15B) anschliessende erste bzw. zweite oder in eine gemeinsame Aufnahmeöffnung (150A, 150B; 1111) in einem Ausleger (111) des Gehäuses (10) einführbar sind.

4. Schlüsselanhänger (1) nach Anspruch 1, 2 oder 3, **dadurch gekennzeichnet, dass** der erste und zweite Kabelkanal (14A, 14B) das darin eingesetzte erste bzw. zweite Anschlusskabel (12A bzw. 12B) kraftschlüssig und/oder formschlüssig halten und/oder dass die Anschlusskabel (12A, 12B) den zugehörigen Kabelkanal (14A, 14B) nach aussen überragen und als Dämpfungselemente dienen.

5. Schlüsselanhänger (1) nach Anspruch 4, **dadurch gekennzeichnet, dass** die erste und die zweite Aufnahmeöffnung (150A; 150B) parallel zueinander und senkrecht zur Längsachse (x) des Schlüsselanhängers (1) verlaufen und vorzugsweise entlang oder quer zur Längsachse (x) des Schlüsselanhängers (1) gegeneinander versetzt sind, so dass die erste Aufnahmeöffnung (150A) in ein auf der zweiten Gehäuseseite (10R) vorgesehenes zweites Gehäuseteil (16B) und die zweite Aufnahmeöffnung (150B) in ein auf der ersten Gehäuseseite (10L) vorgesehenes erstes Gehäuseteil (16A) hinein geführt ist und die beiden in das Gehäuse (10) eingesetzten Steckverbinder (13A, 13B) entweder hintereinander oder übereinander liegen.

6. Schlüsselanhänger (1) nach einem der Ansprüche 1-5, **dadurch gekennzeichnet, dass** das Gehäuse (10) aus zwei zueinander komplementären Gehäuseschalen (10A, 10B) besteht,
a) zwischen denen die als elektronische Baugruppe ausgebildete Kommunikationsvorrichtung (100) vorgesehen ist;
b) an denen im Bereich des Oberteils (10T) des Gehäuses (10) die erste und zweite Gehäuseöffnung (15A; 15B) sowie das erste und zweite Gehäuseteil (16A, 16B) ausgebildet sind;
c) deren Randseiten auf der linken und rechten Gehäuseseite (10L, 10R) den ersten und zweiten Kabelkanal (14A; 14B) bilden;
d) zwischen denen am Unterteil (10U) des Gehäuses (10) eine vorzugsweise von der Längsachse (x) durchlaufene Eintrittsöffnung (19) vorgesehen ist, durch die hindurch das erste und zweite Anschlusskabel (12A; 12B) zur Kommunikationsvorrichtung (100) geführt sind; und
e) an denen im Bereich des Oberteils (10T) des Gehäuses (10) ein der Befestigung von Schlüsseln (2) dienender Montagebügel (11) vorgesehen ist.

7. Schlüsselanhänger (1) nach einem der Ansprüche 1-6, **dadurch gekennzeichnet, dass** eine Bedienungseinheit (105) mit wenigstens einem elektrischen Schaltkontakt vorgesehen ist, mittels der die Betriebsart der Kommunikationsvorrichtung (100) einstellbar ist und dass vorzugsweise eine Anzeigeeinheit (107) vorgesehen ist, auf der die eingestellte Betriebsart und/oder der Status der Kommunikationsvorrichtung (100) darstellbar sind.

8. Schlüsselanhänger (1) nach einem der Ansprüche 1-7, **dadurch gekennzeichnet, dass** die Kommunikationsvorrichtung (100) eine Prozessoreinheit (101) aufweist, die der Steuerung einer Schnittstelleneinheit (106) dient, mittels der die vom ersten und vom zweiten Anschlusskabel (12A; 12B) geführten Datenkanäle direkt oder indirekt miteinander oder mit der Kommunikationsvorrichtung (100) verbindbar sind.

9. Schlüsselanhänger (1) nach Anspruch 8, **dadurch gekennzeichnet, dass** die Schnittstelleneinheit (106) ein Anschlussmodul (1063) mit einer Durchschalteeinheit (1064) aufweist, mittels der die einzelnen Leitungsadern der Anschlusskabel (12A; 12B) miteinander verbindbar sind oder mittels der die von den Anschlusskabeln (12A; 12B) geführten ersten und zweiten Datenkanäle (dkA; dkB) zugehörigen ersten und zweiten Schnittstellenmodulen (1062A, 1062B) zuführbar sind, welche die empfangenen Daten an ein Managementmodul (1061) abgeben, welches die empfangenen Daten weiteren Modulen (102, 103) der Kommunikationsvorrichtung (100) zur Verfügung stellt oder an das zweite bzw. erste Schnittstellenmodul (1062B, 1062A) weiterleitet.

10. Schlüsselanhänger (1) nach einem der Ansprüche 1-9, **dadurch gekennzeichnet, dass** die in der Kommunikationsvorrichtung (100) vorgesehene Prozessoreinheit (101) mit wenigstens einem fest oder lösbar installierten Speichermodul (102; 1020) verbunden ist, in dem ein Betriebsprogramm (1010) und Anwenderdaten speicherbar sind.

11. Schlüsselanhänger (1) nach Anspruch 10, **dadurch gekennzeichnet, dass** die Prozessoreinheit (101) mit wenigstens einem Funkmodul (103, 1030), vorzugsweise mit einem ersten der Ankopplung an lokale drahtlose Netzwerke dienenden ersten Funkmodul (103) und mit einem der Ankopplung an Mobilfunknetze dienenden zweiten Funkmodul (1030), verbunden ist.

12. Schlüsselanhänger (1) nach Anspruch 11, **dadurch gekennzeichnet, dass** die Prozessoreinheit (101) mit wenigstens einem Informationserfassungsmodul (104), wie einem GPS-Modul, einem Beschleunigungssensor, einem Temperatursensor, einem Feuchtigkeitssensor, einem Lichtsensor, einem Drucksensor, einem biometrischen Sensor und/oder einer Zeitmesseinheit, und dass das Betriebsprogramm (1010) derart ausgelegt ist, dass ankommende oder gehende Verbindungen vorzugsweise automatisch erstellt und erfasste Informationen über das wenigstens eine Funkmodul (103, 1030) übertragen werden können.

13. Schlüsselanhänger (1) nach einem der Ansprüche 1-12, **dadurch gekennzeichnet, dass** eine mit einem Akkumulator versehene Stromversorgungseinheit (109) vorgesehen ist, die der Speisung der Kommunikationsvorrichtung (100) dient und die mit wenigstens einer elektrische Energie führenden Leitungsader des ersten und/oder zweiten Anschlusskabels (12A; 12B) verbunden und nach der Verbindung eines Anschlusskabels (12A; 12B) mit einem der Kommunikationsendgeräte (6A; 6B) automatisch aufladbar ist oder zur Speisung wenigstens eines dieser Kommunikationsendgeräte (6A; 6B) geeignet ist.

14. Schlüsselanhänger (1) nach einem der Ansprüche 1-13, **dadurch gekennzeichnet, dass** das Gehäuse (10), vorzugsweise der Ausleger (111) des Gehäuses (10), an dem die Steckverbinder (13A, 13B) anlegen, derart mit einem Montagebügel verbindbar ist, dass zwischen dem Gehäuse (10) und dem Montagebügel (11) ein Verschlusselement (210) gehalten ist, mittels dessen der Schlüsselring (21) verschliessbar ist.

15. Kommunikationsvorrichtung (100) für einen Schlüsselanhänger (1) nach einem der Ansprüche 1-14.
